Europäisches Patentamt

European Patent Office

Office européen des brevets

(11) Veröffentlichungsnummer: **0 152 770**
A1

# (12) EUROPÄISCHE PATENTANMELDUNG

(21) Anmeldenummer: 85100514.0

(22) Anmeldetag: 18.01.85

(51) Int. Cl.⁴: **G 05 B 9/02**, G 05 B 23/02

(30) Priorität: 19.01.84 DE 3401761

(43) Veröffentlichungstag der Anmeldung: 28.08.85
Patentblatt 85/35

(84) Benannte Vertragsstaaten: **AT BE CH DE FR GB IT LI LU NL SE**

(71) Anmelder: **Fresenius AG, Gluckensteinweg 5, D-6380 Bad Homburg (DE)**

(72) Erfinder: **Faeser, Ulrich, Brunnenweg 2, D-6242 Kronberg 2 (DE)**

(74) Vertreter: **KUHNEN & WACKER Patentanwaltsbüro, Schneggstrasse 3-5 Postfach 1729, D-8050 Freising (DE)**

(54) **Überwachte Regeleinrichtung.**

(57) Die Erfindung betrifft eine überwachte Regeleinrichtung und/oder Steuereinrichtung für ein Gerät, dessen Ausgangsleistung zur Vermeidung sicherheitsgefährdender Wirkungen überwacht ist. Darin sind drei Schaltungseinheiten vorgesehen: Eine in üblicher Weise aufgebaute Regelschaltung, eine Überwachungsschaltung, die die Ausgangsleistung auf kritische Grenzwerte hin überwacht, und eine Testschaltung für einen initialen Test zur Überprüfung der Funktionsfähigkeit der Überwachungsschaltung vor der Betriebsfreigabe. Die Regelschaltung und die Überwachungsschaltung ist dabei erfindungsgemäß aus Einzelbauteilen, insbesondere Einzelhalbleitern, konventionell aufgebaut und die Testschaltung besteht aus einem Mikrorechner (14). Dabei wird erreicht, daß die unmittelbar für die Sicherheit während des Betriebs verantwortliche Überwachungsschaltung aus Bauteilen besteht, deren Ausfallverhalten bekannt und abschätzbar ist. Die komplexen Testfunktionen beim initialen Test dagegen werden vom Mikrorechner (14) durchgeführt. Eine solche Gerätestruktur führt zu einem einfachen und sicheren Aufbau und zu einer preiswerten Ausführung einer überwachten Regeleinrichtung.

Fresenius AG.

6380 Bad Homburg

PATENTANWÄLTE
R.-A. KUHNEN*, DIPL.-ING.
W. LUDERSCHMIDT**, DR., DIPL.-CHEM.
P.-A. WACKER*, DIPL.-ING., DIPL.-WIRTSCH.-ING.

55 FR08 27 3

## Überwachte Regeleinrichtung

Die Erfindung betrifft eine überwachte Regeleinrichtung für ein Gerät, dessen Ausgangsleistung zur Vermeidung sicherheitsgefährdender Wirkungen überwacht ist, gemäß dem Oberbegriff des Anspruchs 1.

Die Sicherheitsklasse eines technischen Gerätes ist durch die Anzahl von Fehlern definiert, bei deren Vorhandensein die Regeleinrichtung Maßnahmen gegen ein gefährliches Versagen innerhalb einer vorgegebenen Fehlererkennungszeit ergreifen soll.

Für eine Reihe technischer Geräte wird das Risiko eines gefährlichen Zustands unter bestimmten Bedingungen in Kauf genommen, beispielsweise bei Be- und Verarbeitungsmaschinen, Flammenüberwachungseinrichtungen, Steuerungen für Hebezeuge, Fernwirkanlagen für Gas- und Rohrleitungen,

BÜRO 6370 OBERURSEL**
LINDENSTRASSE 10
TEL. 06171/56849
TELEX 4186343 real d

BÜRO 8050 FREISING*
SCHNEGGSTRASSE 3-5
TEL. 08161/62091
TELEX 526547 pawa d

ZWEIGBÜRO 8390 PASSAU
LUDWIGSTRASSE 2
TEL. 0851/36616

——— TELEGRAMMADRESSE PAWAMUC — POSTSCHECK MÜNCHEN 1360 52-802 ———
— TELECOPY: 08161/62096 (GROUP II - automat.) —

2

Funkfernsteuerungen für Krane nach ZH1/547 und insbesondere elektromedizinische Geräte nach VDE 0750/DIN IEC 601. Der Maßstab für die Höhe dieses Risikos ist die Anzahl der Fehler, die in Kombination einen gefährlichen Zustand bewirken können. Für elektromedizinische Geräte ist der Fall eines ersten Fehlers Gegenstand besonderer Anforderungen und Prüfungen, insbesondere das Versagen eines Schutz- oder Überwachungssystems, wodurch eine unmittelbare Gefahr für die Sicherheit eines Patienten entstehen kann.

Es sind deshalb elektrische oder mechanische Maßnahmen vorzusehen, durch die sich ein Fehler, der die Funktionsfähigkeit einer oder mehrerer Sicherheitseinrichtungen in Frage stellt, und der weder durch mechanische Maßnahmen ausgeschlossen werden kann, noch für den Fehlerausschluß angenommen werden kann, betriebshemmend bemerkbar macht. Sollte sich ein einzelner Fehler nicht bemerkbar machen und sich dann in Verbindung mit einem zweiten, unabhängigen Fehler ein gefährlicher Zustand ergeben, muß ebenfalls die Betriebshemmung erfolgen.

Für Geräte dieser Sicherheitsklasse können die elektrischen Maßnahmen gegen eine Gefährdung durch einen ersten Fehler oder gegen einen unerkannt gebliebenen ersten Fehler in Verbindung mit einem zweiten unabhängigen Fehler durch eine besondere Gerätestruktur realisiert sein:

Es ist bekannt, die Ausgangsleistung eines Gerätes, deren ungewollte Veränderung, insbesondere durch ein Überschreiten von Grenzwerten, eine Gefährdung bewirken würde, dadurch einfachfehlersicher gemäß obiger Definition zu machen, daß diese Ausgangsleistung durch eine Regel- oder Steuerschaltung aufrechterhalten wird und dieser Regel- oder Steuerschaltung ein Überwachungssystem zugeordnet ist. Das Überwachungssystem gibt bei einer ungewollten Veränderung der Ausgangsleistung Alarm und bringt zugleich die Ausgangsleistung in einen ungefährlichen Bereich oder schaltet sie ganz ab. Ein so ausgeführtes Gerät ist sicher gegen einen ersten Fehler im Regel- oder Steuersystem, da dieser durch das Überwachungssystem aufgedeckt wird. Würde jedoch ein erster Fehler im Überwachungssystem auftreten und unerkannt bleiben, könnte dieser in Verbindung mit einem zweiten Fehler im Steueroder Regelsystem eine gefährliche Ausgangsleistung bewirken. Deshalb gilt beispielsweise bei elektromedizinischen Geräten diese Struktur die Bedingung, daß die richtige Funktion des Überwachungssystems zumindest bei Beginn einer Betriebsphase automatisch und zwangsweise geprüft werden muß. Es ist somit neben dem Regel- oder Steuersystem und dem Überwachungssystem ein weiteres System für den initialen und automatischen Selbsttest vorzusehen.

Es ist bekannt, bei den oben genannten Gerätestrukturen Mikrorechner einzusetzen in der Weise, daß die Funktionen entweder des Regel- oder Steuersystems und/oder des Überwachungssystems vollständig oder teilweise von einem Mikrorechner ausgeführt werden. Nachteilig ist hierbei, daß die Ausfallrichtung eines Mikrorechners in keiner Weise vorhergesagt werden kann, so daß umfangreiche konventionelle Schaltungen zusätzlich erforderlich sind, die die korrekte Arbeitsweise des Mikrorechners ständig und/oder initial überprüfen. Zudem ist der Aufdeckungsgrad dieser konventionellen Schaltungen beschränkt. Die Erhöhung des Aufdeckungsgrades zur Überprüfung komplexerer Zusammenhänge ist mit einer beträchtlichen Steigerung des Aufwandes konventioneller Schaltmittel verbunden.

Somit ist beim vorbeschriebenen Einsatz eines Mikrorechners das Sicherheitsrisiko trotz der Überwachung relativ hoch, verbunden mit einem hohen Aufwand an Schaltungstechnik und Herstellungskosten.

3a

In der deutschen Fachzeitschrift "Der Elektroniker", Nr. 10, 1975, Jahrgang 14, Seite 6 bis 9, werden allgemein Probleme der Selbstüberwachung und der Sicherheit bei Antrieben mit variabler Drehzahl diskutiert. Bei dem in dieser Druckschrift erläuterten drehzahlgeregelten Antrieb wird kontinuierlich ein Sollwert-/Istwertvergleich der Drehzahl durchgeführt. Weicht der Sollwert über bestimmte Grenzen hinaus vom Istwert ab, so wir ein Alarm ausgelöst. Zur Vermeidung von Alarmauslösungen bei kurzfristigen Laststößen ist vor dem Alarmausgang eine Zeitverzögerung vorgesehen, welche das Alarmsignal am Ausgang nur dann erscheinen läßt, wenn die Alarmbedienung eine bestimmte Mindestdauer lange vorgelegen hat.

Nachteilig bei dem aus dieser Druckschrift bekannten geregelten Antrieb ist jedoch, daß keinerlei Tests für die Überwachungsschaltung vor Inbetriebnahme vorgesehen sind.

Weiter ist aus der DE-OS 28 41 220 ein Verfahren zum Prüfen der Funktion eines Regelsystems bekannt, nach dem zwischen einem Steuergerät mit Selbstüberwachungsschaltung und dem zu überwachenden Antrieb ein Prüfgerät geschaltet wird. Bei dem daraus bekannten Regelsystem für ein Antiblockiersystem bei Kraftfahrzeugen wird nach dem Starten des Fahrzeuges das Antiblockiersystem durch eine in das Steuergerät integrierte Selbstüberwachungsschaltung nach einem internen Prüfprogramm auf eventuell vorhandene Fehler geprüft. Mit einem zusätzlich zuschaltbaren Prüfgerät können Fehler der Antiblockierschaltung simuliert werden, so daß festgestellt werden kann, ob die Selbstüberwachung des Antiblockiersystems einwandfrei funktioniert. Nachteilig ist hierbei, daß es sich bei der Selbstüberwachungsschaltung offensichtlich um eine komplexe Schaltung handelt, mit der ein internes Prüfprogramm abgearbeitet wird, so daß anzunehmen ist, daß ein Mikrorechner Verwendung findet. Wie jedoch bereits oben auf Seite 3, Absatz 2, aufgeführt ist, ist es mit

3b

einer konventionellen Schaltung sehr schwierig, eine mikrorechnergesteuerte Schaltung zu überprüfen.

Weiterhin ist aus der DE-OS 33 06 897 eine überwachte Regeleinrichtung für ein Triebwerk mit Generator bekannt. Diese Regeleinrichtung weist eine Regelschaltung, eine Überwachungsschaltung und eine Testschaltung für einen initialen Test zur Überprüfung der Überwachungsschaltung auf. Die Testschaltung besteht jedoch lediglich aus einem Schalter, mit dem ein Fehlerzustand von Hand getriggert werden kann. Umfangreichere und komplexere Überprüfungen der Überwachungsschaltung sind daher bei dem aus dieser Druckschrift bekannten Stand der Technik nicht möglich.

Aufgabe der Erfindung ist es demgegenüber, eine überwachte Regeleinrichtung bzw. Steuereinrichtung für ein einfachfehlersicheres Gerät zu schaffen, die bei einfachem Aufbau ein hohes Maß an Sicherheit gewährleistet. Weiter ist es Aufgabe der Erfindung, schaltungstechnische Lösungen für die vorgenannte Struktur aufzuzeigen.

Die Aufgabe der Erfindung wird bei einer gattungsgemäßen überwachten Regeleinrichtung mit den kennzeichnenden Merkmalen des Anspruchs 1 gelöst.

Gemäß Anspruch 1 sind die eigentliche Regelschaltung (alle Ausführungen gelten auch für eine nichtrückgekoppelte Regelschaltung, d. h. eine Steuerschaltung) und die Überwachungsschaltung aus Einzelbauteilen, insbesondere Einzelhalbleitern oder Operationsverstärkern, konventionell aufgebaut. Die Testschaltung für den initialen Test der Überwachungsschaltung soll dagegen aus einem Mikrorechner bestehen. Im Gegensatz zu den bekannten Lösungen wird der Mikrorechner hier weder mit den Regel- oder Steueraufgaben noch mit den Überwachungsaufgaben betraut, sondern übernimmt grundsätzlich nur den initialen Nachweis der korrekten Funktion der Überwachungsschaltung. Erst nach dem Initialtest bei einer fehlerlosen Überwachungsschaltung ist der Übergang in die Betriebsphase möglich. Während der Betriebsphase führt der Mikrorechner entweder keine oder Funktionen aus, die nicht oder von untergeordneter sicherheitsrelevanter Bedeutung sind. In der Regel ist eine solche Anordnung den bekannten Lösungen sowohl aus technischer als auch aus kaufmännischer Sicht vorzuziehen, da die Regel- oder Steuerfunktion der Ausgangsleistung und deren Überwachung durch konventionelle Mittel meist einfach realisiert werden kann. Der initiale Nachweis der korrekten Funktion ist jedoch meist mit ebenfalls konventionellen Mitteln schwierig und aufwendig durchzuführen.

Bei der erfindungsgemäßen Einrichtung, bei der die Regel- oder Steuerschaltung und die Überwachungsschaltung mit konventionellen Schaltmitteln ausgeführt ist, ist das Ausfallverhalten abschätzbar und nachweisbar, da das Ausfallverhalten der konventionellen Einzelschaltmittel bekannt und nachweisbar ist. Damit kann der Nachweis der korrekten Funktion des Mikrorechners in der erfindungsgemäßen Einrichtung entfallen. Ein Ausfall des Mikrorechners bedeutet hier einen inkorrekten Selbsttest, da dieser auf dem sicherheitsrelevanten Bereich nur initale Testfunktionen ausführt. Ein Ausfall des Mikrorechners würde erst mit einem Zweitfehler im Regel- oder Steuersystem oder Überwachungssystem und einem Drittfehler im Überwachungssystem oder Regel- oder Steuersystem zu gefährlichen Ausgangsleistungen führen können. Es ist somit hier kein Bauteil (Mikrorechner) mit einer unsicheren Komponente durch sein unbekanntes und nicht nachweisbares Ausfallverhalten mit sicherheitsrelevanten Funktionen betraut, das erhöhte Anforderungen an weitere überprüfende Schaltungsteile stellen würde.

Die überwachte Regeleinrichtung besteht somit aus einem zweikanaligen System, der Regel- oder Steuerschaltung und der Überwachungsschaltung, das mit Einzelhalbleitern realisiert ist. Ein drittes System, das im wesentlichen aus einem Mikrorechner besteht, wird mit jeder Inbetriebnahme aktiviert und weist automatisch in einem initialen Selbsttest die Funktionsfähigkeit der Überwachungsschaltung nach.

Das Schutzziel wird daher folgendermaßen erreicht: Erstfehler in der Regel- oder Steuerschaltung, die gefährliche Abweichungen der Ausgangsleistung zur Folge haben, werden während der Betriebsphase durch die Überwachungsschaltung aufgedeckt und führen zu einer Begrenzung der Ausgangsleistung auf einen ungefährlichen Bereich oder zu deren Abschaltung durch die Überwachungsschaltung. Erstfehler der Überwachungsschaltung werden während des Betriebs nicht aufgedeckt, werden jedoch mit der nächsten, versuchten Inbetriebnahme durch die Testschaltung erkannt und führen zu einer Sperrung der Betriebsphase. Während der Betriebsphase können vom Mikrorechner weitere Aufgaben, die jedoch nicht oder untergeordneter sicherheitsrelevanter Natur sind, übernommen werden.

Gemäß Anspruch 2 soll die Überwachungsschaltung und/oder Testschaltung mit einer akustischen und/oder optischen Alarmgabeeinrichtung verbunden sein. Dadurch wird nicht nur die Ausgangsleistung bei einem Fehler auf einen sicheren Wert gebracht, sondern der Fehler einer Bedienperson auch unmittelbar angezeigt.

Mit dem in Anspruch 3 vorgeschlagenen Zeitverzögerungsglied in der Überwachungsschaltung wird erreicht, daß kurzzeitige Überschreitungen eines Grenzwertes keinen Einfluß auf die Ausgangsleistung haben und andererseits bei Überschreitung eines Grenzwertes eine sichere und anhaltende Alarmgabe erfolgt. Diese an sich zweckmäßige Maßnahme ist selbstverständlich nur bei Geräten möglich, wo eine kurzzeitige Überschreitung eines Grenzwertes noch zu keinen gefährlichen Wirkungen führen kann.

Mit den Merkmalen des Anspruchs 4, während der Testzeit die Verbindung des Reglerausgangs zum Stellglied zu unterbrechen, wird erreicht, daß während des Tests sicher jede Beeinflussung durch die Regelschaltung ausgeschlossen ist und tatsächlich, wie gefordert, nur die Überwachungsschaltung vom Mikrorechner überprüft wird.

Beim Initialtest ist es in der Regel erforderlich, das Stellglied über seinen gesamten Bereich zu verfahren, beispielsweise den Pumpenmotor einer Spritzenpumpe über seinen gesamten Drehzahlbereich hin zu verändern. Nur dadurch kann die Überwachungsschaltung mit dem Ansprechen von Grenzwerten etc. sicher überprüft werden. Falls im angegebenen Beispiel der obere Grenzwert der Überwachungs-

schaltung nicht funktionieren würde, würde der Mikrorechner auf sein Ansprechen warten. Der Mikrorechner würde in dieser Zeit zwar keinesfalls die Betriebsphase freigeben, der Pumpenmotor würde aber dennoch mit seiner höchsten Drehzahl arbeiten. Dies würde bei einer bereits angeschlossenen Spritzenpumpe, beispielsweise bei einem Dialysepatienten, zu gefährlichen Zuständen führen. Mit Anspruch 5 ist daher eine äußerst sichere Schaltung aufgezeigt, indem die Energieversorgung während des Tests von einem geladenen Kondensator ausgeht. Da die übliche Energieversorgung während des Tests abgetrennt ist, kann nur die Kondensatorladung verbraucht werden, wonach die Ausgangsleistung sicher zu Null wird. Diese Schaltung ist vorteilhaft bei allen möglichen überwachten Regel- und Steuereinrichtungen anwendbar, so daß ihr eigenständige Bedeutung zukommt.

Besonders vorteilhaft läßt sich die aufgezeigte Regeleinrichtung in einer drehzahlgeregelten Spritzenpumpe gemäß Anspruch 6 einsetzen.

Anspruch 7 hat eine in ihren Einzelheiten erprobte und gut funktionierende überwachte Regeleinrichtung bei einer Spritzenpumpe zum Inhalt.

Anhand einer Zeichnung wird ein Ausführungsbeispiel der Erfindung mit weiteren Einzelheiten, Merkmalen und Vorteilen näher erläutert.

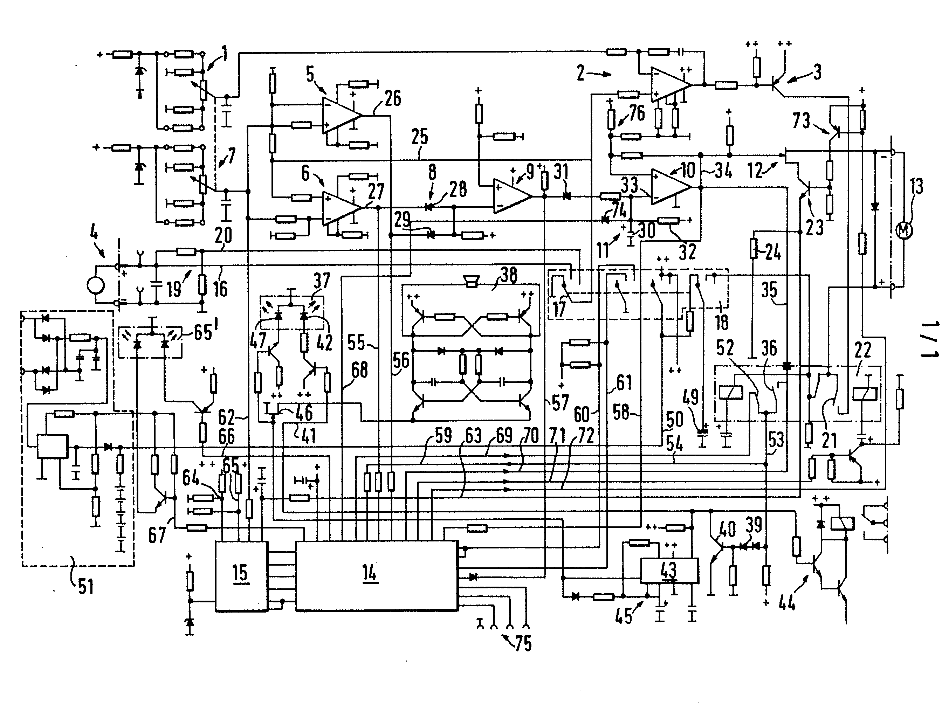

Die einzige Figur zeigt einen Schaltplan für eine überwachte Regeleinrichtung einer Spritzenpumpe.

In der einzigen Figur ist eine überwachte Regeleinrichtung für eine Spritzenpumpe dargestellt, wie sie bei Dialysebehandlungen verwendet werden. Die Regeleinrichtung besteht im wesentlichen aus drei Einheiten: Als erstes ist eine Regelschaltung vorgesehen, die einen Sollwertgeber 1, einen Regelverstärker 2 mit nachgeschaltetem Leistungstransistor 3 und einen Tachogenerator 4 als Istwertgeber umfaßt.

Als zweites ist eine Überwachungsschaltung vorgesehen, die aus zwei Komparatoren 5, 6 besteht, die mit einem weiteren Sollwertgeber 7 und mit dem Tachogenerator 4 verbunden sind und denen ein Oderglied 8 sowie zwei weitere Komparatoren 9, 10 nachgeschaltet sind. Zwischen den Komparatoren 9, 10 ist ein Zeitglied 11 angeordnet und der letzte Komparator 10 steuert einen MOS-Schalttransistor 12, der im Stromkreis eines Motors 13 liegt.

Als dritte Einheit ist eine Testschaltung für einen initialen Test der Überwachungsschaltung vorgesehen, die aus einem Mikrorechner 14 besteht, der mit einem Analog-Digital-Umsetzer 15 zusammenarbeitet.

Im einzelnen ist der Sollwertgeber 1 der Regelschaltung ein Potentiometer, mit dem aus einer anliegenden Spannung ein Teil als Sollwertvorgabe für einen Vergleichereingang des Regelverstärkers 2 abgegriffen wird. Der Tachogenerator 4 ist über eine Leitung 16 und einen Schaltkontakt 17 eines Betriebsschalters 18 mit dem zweiten Eingang des Regelverstärkers 2 verbindbar. Dem Tachogenerator nachgeschaltet ist eine Widerstandskombination 19, die die Spannung des Tachogenerators auf ein Zehntel des Wertes herabsetzt und die über eine Leitung 20 bei einer nächsten Schaltstellung des Schaltkontakts 17 ebenfalls mit dem zweiten Eingang des Regelverstärkers 2 verbindbar ist. Dadurch läßt sich der Ausgangswert des Regelverstärkers 2 und damit die Pumpenleistung um den Faktor 10 erhöhen. Die Übertragungsfunktion des Regelverstärkers 2 ist proportional und integral und dem Zeitverhalten des Motors so angepaßt, daß eine ausreichende Regelgeschwindigkeit bei Laständerung sowie gutes Führungsverhalten bei Sollwertänderung nahezu ohne Überschwingung gewährleistet ist. Im Betriebsfall wird über den dem Regelverstärker nachgeschalteten Leistungstransistor 3, einen (in der Zeichnung offenen) Schaltkontakt 21 eines Freigaberelais 22, den Motor 13, den durchlässigen Schalttransistor 12, einen weiteren nachgeschalteten Schalttransistor 23 und einen Widerstand 24 der Motorstromkreis geschlossen.

Im normalen Betriebsfall (das Freigaberelais 22 ist erregt und der Schaltkontakt 21 geschlossen) hat die Regelschaltung folgende Funktion: Mit dem Sollwertgeber 1 wird die gewünschte Pumpenförderleistung eingestellt, die im Regelverstärker 2 mit dem Ausgang des Tachogenerators 4, dem Istwert, verglichen wird. Wie bereits ausgeführt, ist dabei je nach Stellung des Schaltarms 17 am Betriebsschalter 18 eine Vervielfachung mit dem Faktor 10 möglich. Entsprechend dem Vergleich und der Übertragungsfunktion gibt der Regelverstärker 2 seinen Ausgangswert ab, der über den Leistungstransistor 3 direkt als Wert des Motorstroms in den Motorstromkreis eingespeist wird.

Als nächstes wird der genaue Aufbau der Überwachungsschaltung und ihre Funktion im Betriebsfalle beschrieben, d.h. wenn die Spritzenpumpe nach dem später zu beschreibenden Initialtest bereits läuft. Die Komparatoren 5, 6 sind Operationsverstärker 5, 6, die als Komparatoren geschaltet sind. Die Komparatoren 5, 6 sind Grenzwertschalter für Drehzahlwerte des Motors 13, die zu einem gefährlichen Zustand beim Patienten führen können. Der Komparator 5 ist ein Grenzwertgeber für die Überschreitung einer bestimmten hohen Drehzahl, während der Komparator 6 ein Grenzwertgeber für die Unterschreitung einer niedrigen Drehzahl ist. Die Komparatoren 5, 6 bilden somit ein "Fenster", dessen Breite durch die festen Widerstände an den entsprechenden Eingängen bestimmt ist. Dieses "Fenster" muß einen bestimmten unkritischen Bereich um den eingestellten Regelsollwert am Sollwertgeber 1 umfassen, d. h. bei einer Sollwertveränderung für die Regelung muß die Stellung des "Fensters" mitverändert werden. Dies geschieht durch den Sollwertgeber 7, der mechanisch mit dem Sollwertgeber 1 in einem Doppelpotentiometer verbunden ist. Damit wird die vorbestimmte Vergleichsspannung für die Komparatoren 5, 6 gemeinsam und relativ zur Regelsollwertänderung verändert. Am jeweils anderen Eingang der Komparatoren 5, 6 liegt über die Leitung 25 der Spannungswert des Tachogenerators 4 direkt oder nach Veränderung der Schaltstellung des Schaltkontakts 17 verringert um den Faktor 10 an. Wenn der über die Leitung 25 anliegende Drehzahlwert die festeingestellten Werte an den Komparatoren 5 oder 6 über- bzw. unterschreitet, wechseln deren Ausgangswerte. Liegt der Drehzahlbetrag innerhalb des "Fensters" sind die Ausgangsspannungen der Komparatoren 5, 6 positiv, bei Abweichung daraus negativ.

Die Komparatorausgänge 26, 27 sind über zwei Dioden 28, 29 in einer Oderschaltung 8 zusammengeführt und werden über den nachgeschalteten Komparator (Operationsverstärker) 9 gegen die halbe positive Spannung invertierend verglichen. Bei einer Drehzahlabweichung außerhalb des "Fensters" wird der Ausgang des Komparators 9 positiv und ein Kondensator 30 des Zeitgliedes 11, dessen Ladung sonst eine Diode 31 verhindert, wird über einen Widerstand 32 geladen.

Das bedeutet, daß bei einer Abweichung der Drehzahl außerhalb der zulässigen Toleranz die Spannung entsprechend der Ladung des Kondensators 30 am Eingang 33 des Komparators 10 nur langsam ansteigt. In diesem Komparator (Operationsverstärker) 10 wird nun die Kondensatorspannung gegen einen Teil der positiven Spannung ebenfalls invertierend verglichen. Überschreitet die Kondensatorspannung des Kondensators 30 diese Schwellspannung, schaltet der Komparator 10 mit seinem Ausgang nach Masse und sperrt den nachgeschalteten MOS-Transistor 12. Da dieser im Motorstromkreis liegt, wird dieser bei einer Drehzahlabweichung aus der durch die Komparatoren 5, 6 vorgegebenen Toleranz unterbrochen und damit die Pumpenförderung eingestellt. Die Über- bzw. Unterdrehzahlsituation wird also verzögert auf den Abschalttransistor 12 weitergegeben, wobei die Verzögerungszeit im wesentlichen durch die Dimensionierung des Kondensators 30 und des Widerstands 32 sowie durch die mit dem Widerstandsverhältnis 14 eingestellte Schwellenhöhe des Komparators 10 bestimmt ist. Bei einem Wechsel aus einem unzulässigen Über- bzw. Unterdrehzahlbereich in den zulässigen "Fensterbereich" wird der Kondensator ebenfalls verzögert entladen. Somit werden kurzzeitige, an sich unzulässige Drehzahlabweichungen, die hier noch keine gefährlichen Zustände beim Patienten hervorrufen, unterdrückt. Zugleich ist jedoch auch sichergestellt, daß bei einer Abschaltung und der weiter unten erläuterten Alarmgabe der erkannte Alarmzustand zu einer stabilen Alarmmeldung führt.

Mit der vom Ausgang des Komparators 10 zum Abschalttransistor 12 führenden Leitung 34 ist eine weitere Leitung 35 verbunden, die über einen Schaltarm 36 (der im normalen Betriebsfall geschlossen ist) mit einer Alarmeinrichtung verbunden ist. Die Alarmeinrichtung besteht im wesentlichen aus einer optischen Anzeigeeinheit 37 und einem akustischen Alarmgeber 38. Die Leitung 35 führt über Dioden 39 auf die Basis eines Transistors 40. Im ungestörten Betrieb ist der Transistor 40 leitend und steuert damit den grünleuchtenden Teil der optischen Anzeige 37 (LED) über die Leitung 41 an. Diese Anzeige bedeutet einen störungsfreien Betrieb mit Regelabweichungen der Drehzahl innerhalb der zulässigen Fenstergröße. Bei größeren Abweichungen wird über die Leitung 35 der Transistor 40 zugleich mit dem Abschalttransistor 12 gesperrt. Dadurch wird die grünleuchtende LED 42 abgeschaltet, ein Timer aktiviert und zugleich ein Schwesternrufrelais 44 angesteuert, mit dessen potentialfreien Kontakten eine entfernte Alarmgabe möglich ist. Wenn der Timer 43 freigegeben ist, arbeitet dieser als astabiler

Multivibrator. Die Frequenz und das Tastverhältnis sind durch ein RC-Glied 45 festgelegt. Der Ausgang des Timers liegt für ca. 3 Sekunden nahezu auf Massepotential und für ca. 0,6 Sekunden nahezu auf Batteriepotential und schaltet damit eine rotleuchtende LED 47 im optischen Anzeiger 37 und parallel dazu über einen MOS-Transistor den Alarmtongeber 38.

Als Alarmtongeber 38 ist ein Miniaturlautsprecher verwendet, den ein kollektorgekoppelter, freischwingender, astabiler Multivibrator mit geschalteten Kollektorwiderständen in einer Leistungsbrücke erregt. Die Frequenz ist dabei auf ca. 2 KHz eingestellt. Die Schaltung schwingt, im Gegensatz zu gängigen kollektorgekoppelten Multivibratoren, sicher an.

Zur Verminderung der Verlustleistung ist die Versorgungsspannung der Alarmschaltung nicht stabilisiert.

Nachdem nun der normale Betriebsfall mit normal arbeitender Regelung innerhalb des zulässigen Fensterbereichs und anschließend die Überwachungsschaltung mit ihrer Funktion bei einer unzulässig großen Drehzahlabweichung mit Abschaltung und Alarmgabe beschrieben wurde, soll wegen der besseren Verständnismöglichkeit der Aufbau und die Funktion der Testschaltung für die Funktionsüberprüfung der Überwachungsschaltung erst hier dargestellt werden. Diese Funktionsprüfung wird automatisch vor jeder Betriebsphase durchgeführt.

Ein wesentliches Merkmal während der Testphase besteht darin, daß das Freigaberelais 22 unerregt ist und die Regelstellgröße durch den offenen Kontakt 21 vom Motorstrom abgetrennt ist. Wenn der Betriebsschalter 18 eingeschaltet wird, wird über seinen letzten Schaltarm 48 ein Kondensator 49 in den Motorstromkreis eingeschaltet. Dieser Kondensator 49 ist im ausgeschalteten Zustand des Betriebsschalters über die Leitung 50 ständig mit der batteriegepufferten Spannungsversorgung 51, die ständig am Netz liegt, verbunden und daher vor jeder Betriebsphase geladen. Durch die Abtrennung der Regelung wird jede Beeinflussung des Motorstromkreises in der Testpahse durch den Motorservo ausgeschlossen und zugleich steht während der Testphase lediglich die begrenzte Ladung des Kondensators 49 als Testenergie zur Verfügung. Der Motor kann in der Testphase daher nur solange drehen, bis die Ladung des Kondensators verbraucht ist.

Ein weiterer Schaltkontakt 52 verbindet in der Stellung Test des Freigaberelais 22 (dargestellter Zustand) die Steuerleitung 53 der Alarmschaltung mit dem Mikrorechner 14. (Während der Betriebsphase ist die Steuerleitung 53 über den Schaltkontakt 36 mit der Leitung 35 und dem Ausgang der Überwachungsschaltung verbunden.) Damit kann in der Teststellung ein Alarm nur durch den Mikrorechner 14 veranlaßt werden. Bei einem ordnungsgemäßen Testablauf kann der Betreiber zwei Testalarme (Unterdrehzahl und Überdrehzahl) beobachten, die dann den Hinweis auf die ordnungsgemäße Funktion der Überwachungsschaltung geben. Anschließend wird dann bei ordnungsgemäßem Testablauf das Freigaberelais vom Mikrorechner 14 errregt und die Schaltkontakte 21 und 36 geschlossen. Dadurch wird der Motorstromkreis über den Regeltransistor 3 mit unstabilisierter Versorgungsspannung verbunden und zugleich die Steuerleitung 53 mit der Überwachungsschaltungsleitung 35. Die Steuerleitung 53 hat jedoch über eine Leitung 54 Kontakt mit dem Mikrorechner 14, so daß in der Betriebsphase ein Alarm sowohl über die Drehzahlüberwachungsschaltung als auch vom Mikrorechner 14 aktiviert werden kann.

Der Mikrorechner nimmt über folgende Leitungen Digitalinformationen unmittelbar auf:
- über Leitungen 55, 56 die Lage der Ausgänge der Kompa-

14

ratoren 5 und 6 für die Drehzahlgrenzwertermittlung,
- über die Leitung 57 die Ausgangslage des Komparators 9 nach dem Oderglied 8,
- über die Leitung 58 die Ausgangslage des letzten Komparators 10 aus der Drehzahlüberwachungsschaltung bzw. die Gatespannung des Abschalttransistors 12,
- das Potential der Ansteuerleitung 53 für die Alarmschaltung über die Leitung 59,
- über die Leitungen 60, 61 die Stellung des Betriebsschalters 18, ob der normale Bereich oder mal Faktor 10 eingestellt ist.

Der Mikrorechner 14 nimmt folgende (kontinuierliche) Informationen über den Analogdigital-Umsetzer 15 auf:
- über die Leitung 62 die Sollwertspannung für die Drehzahlüberwachungsschaltung,
- über die Leitung 63 die Größe des Motorstroms,
- über die Leitung 64 die Batteriespannung und über Leitung 65 die Ausgangsspannung des 5V-Festspannungsreglers.

Dem Mikrorechner 14 ist der Analogdigital-Umsetzer 15 als ein 8-Bit-Analogdigital-Umsetzer mit vier unipolaren Eingängen zugeordnet. Die Referenzspannung des Umsetzers wird über eine Band-Gap-Referenzdiode gewonnen. Der Signalverkehr zwischen dem Mikrorechner 14 und dem Analogdigital-Umsetzer 15 erfolgt im Zeitmultiplex. Den Übertragungstakt gibt der Mikrorechner 14 vor (Leitung SCK), die Kanaladresse wird über die Leitung SI an den Analogdigital-Umsetzer 15 gegeben und über die Leitung DL gespeichert. Das Ende der Wandlung und das Wandlerergebnis wird über eine weitere Leitung (EOC) aufgenommen. Der Rechner aktiviert die Wandlung über die Leitung CS.

Der Mikrorechner 14 kann folgende Funktionen durchführen:

- den rotleuchtenden Teil einer LED-Anzeige 65' zur Überstromanzeige über die Leitung 66 aktivieren,

- den grünleuchtenden Teil der LED-Anzeige 65' (Netz EIN) über die Leitung 67 abschalten,

- den Kondensator 30 aus dem Zeitglied 11 über die Leitung 68 entladen,

- einen akustischen und optischen Alarm auslösen; in der Testphase über die Leitung 69 und im Betriebsfall über die Leitung 70,

- das Freigaberelais 22 über die Leitung 71 erregen,

- den Motor 13 über die Leitung 72, einen Transistor 73 und den nachgeschalteten Transistor 23 stromlos schalten.

Der automatische Selbsttest läuft mit jeder Inbetriebnahme im wesentlichen folgendermaßen ab:

Der Kondensator 49 ist in der Stellung AUS des Betriebsschalters 18 mit der Batterie verbunden. Mit dem Einschalten des Betriebsschalters 18 wird mit einem Teil der Kondensatorladung des Kondensators 49 das Freigaberelais 22 in die (gezeichnete) Stellung Test gebracht und die Restladung für den Hochlauf des Motors 13 wähend der Testphase bereitgestellt. Der Transistor 23 ist mit dem Einschalten stromlos, d. h. der Motor steht. Ein Festspannungsregler erzeugt das Reset-Signal für den Rechner (aktiv low), wodurch die Rechner-Ports als Eingang geschaltet werden und ein Potential entsprechend der Versorgungsspannung aufweisen. Der Transistor 23 bleibt weiter gesperrt. Nach mindestens 50 msec startet der Mikrorechner 14 das Programm.

Am Programmbeginn steht die Freigabe zum Interrupt, der während der Testphase immer dann ausgelöst wird, wenn der Betriebsschalter 18 in die Stellung "Mal 10" geschaltet wird. Die sogenannte Interrupt-Service-Routine löst Rechneralarm aus. Damit ist der Selbsttest nur in der Stellung "Mal 1" des Betriebsschalters 18 möglich. Ein Drehen am Betriebsschalter 18 während der Testphase führt somit zur Alarmgabe. Für einen ordnungsgemäßen Testablauf muß daher der Benutzer den Betriebsschalter 18 in die Stellung "Mal 1" bringen und kann dann
den ordnungsgemäßen Testablauf, angezeigt durch zweimalige
Alarmgabe mit eventueller anschließender Freigabe, beobachten.

Es erfolgt weiter die Aktivierung der Alarme (Leitung 69)
sowie die Überprüfung der Batteriespannung (Leitung 64),
der 5V-Festspannung und des Sollwerts für die Drehzahlüberwachung (Leitung 62), sowie die Bestätigung des
stromlosen Zustands des Motors (Leitung 63) und die Überprüfung der Ausgangslage aller Komperatoren der Drehzahlüberwachung (Leitungen 55, 56, 57, 58). Alle Ausgangslagen
müssen dabei dem Istzustand "Motor 13 steht; Unterdrehzahl" entsprechen.

Nun wird durch einen vom Mikrorechner 14 hervorgerufenen
Hochlauf des Motors 13 die Funktion der Grenzwertkomparatoren 5, 6 überprüft. Der Mikrorechner 14 muß dabei in die
Überwachungsschaltung so eingreifen, daß der Abschalttransistor 12 einschaltet. Hierzu wird über eine Diode
74 und die Leitung 68 der Kondensator 30 entladen. Nun
wird der vom Mikrorechner 14 schaltbare Transistor 24
eingeschaltet, wodurch der Motorstromkreis zum Kondensator
49 hin geschlossen ist. Der Motor läuft somit mit ständig
steigender Drehzahl an. Über den Spannungsabfall am Widerstand 24 und am Analogdigital-Umsetzer 15 wird der Motorstromfluß vom Mikrorechner 14 überprüft. Mit steigender
Drehzahl werden die Schwellwerte der Komparatoren 5, 6
überfahren und über die Leitungen 55, 56 der Wechsel deren
Ausgangslagen sowie über die Leitung 57 der Wechsel der
Ausgangslage des Komparators 9 überprüft. Die Ausgangslage
des letzten Komparators 10 wird nicht überprüft, da wegen
der vom Kondensator 49 nur beschränkt zur Verfügung stehenden Testenergie die durch das Zeitglied 11 vor dem
Komparator 10 gegebene Verzögerung nicht abgewartet
werden kann. Der Wechsel der Ausgangslagen der drei Komparatoren 5, 6, 9 hat bei hochdrehendem Motor dem Ablauf (Unterdrehzahl - Drehzahl entspricht dem Sollwert - Überdrehzahl) zu entsprechen. Nach dieser Überprüfung unter grober Messung der Fensterbreite wird der Motor wieder stromlos, immer mit anschließender Prüfung, geschaltet.

In einem weiteren Schritt wird nun die Verhinderung der Aufladung des Kondensators 30 über die Diode 74 aufgehoben. Es erfolgt nun die Messung der Laufzeit über das RC-Glied am Kondensator 30 und über den letzten Komparator 10 durch den Mikrorechner 14: Die Ausgangslage des Komperators 9 muß die Alarmlage sein, damit muß sich der Kondensator 30 aufladen und mit Erreichen der Schwellspannung muß die Ausgangslage der letzten Komparatorstufe 10 in die Alarmlage wechseln. Die Zeitdifferenz zwischen diesem Zeitpunkt und dem Zeitpunkt der Freigabe der Aufladung durch den Mikrorechner 14 ist die Gesamtlaufzeit dieser Stufe und wird im Rechner abgelegt.

Das RC-Glied 30 wird nun wieder durch den Mikrorechner 14 entladen und zur erneuten Ladung freigegeben, um die Abschaltfähigkeit des Abschalttransistors 12 zu testen. Die Ausgangslage des Komparators 9 ist immer noch bei stromlosem Motor die Alarmlage. Damit muß sich der Kondensator 30 mit der dem Rechner nun bekannten Zeitkonstanten aufladen, und mit Erreichen der Schwellspannung muß der Abschalttransistor 12 gesperrt werden. Kurz vor diesem Zeitpunkt schaltet der Rechner den Motor wieder ein, der mit der vorhandenen Restladung auf dem Kondensator 49 noch drehen kann, um die Abschaltung des Motors durch den Abschalttransistor 12 zu kontrollieren. Dies wird über die Leitung 63 - Motorstrom vorhanden/stromlos - durchgeführt. Es wird nun noch die nahezu vollständige Entladung des Kondensators 49 abgewartet. Mit Abschluß dieses letzten Testschritts wird der Rechneralarm abgeschaltet und das Freigaberelais 22 in seine Betriebsstellung gebracht. Um den Förderbereich "Mal 10" zuzu-

0152770

lassen, wird der Interrupt-Eingang durch das Programm inaktiviert. Während der vorbeschriebenen Testalarme wird in der vorliegenden Schaltung auch das Schwesternrufrelais jedesmal erregt. Es wäre jedoch ohne weiteres möglich, den dadurch hervorgerufenen Fernalarm während der Testphase durch Abschalten der Zuleitung zum Schwesternrufrelais 44 zu unterdrücken.

Mit Freigabe durch den Mikrorechner 14 überprüft dieser noch einmal die Steuerleitung 53 für die Alarmschaltung auf korrektes Potential. Dieser letzte Prüfschritt leitet die ständige Kontrolle von Motorstrom, Batteriespannung, 5V-Festspannung, Sollwert und Position des Betriebsschalters 18 ein. Im vorliegenden Fall übernimmt somit der Mikrorechner 14 auch während der Betriebspahse Überwachungsfunktionen. Die vom Mikrorechner 14 überwachten Größen führen jedoch nicht unmittelbar zu einer Gefährdung eines an die Spritzenpumpe angeschlossenen Patienten, da hier lediglich eine unerwünschte Förderleistung und damit Drehzahl eine gefährliche Wirkung hervorrufen kann. Diese Drehzahl wird aber unabhängig vom Mikrorechner von der Drehzahlüberwachungsschaltung auf kritische Grenzwerte hin überwacht. Der Mikrorechner 14 ist somit im Sinne der eingangs gemachten Ausführungen für nichtsicherheitsrelevante Zusatzfunktionen eingesetzt.

Es wird ein Gleichstrommotor verwendet, bei dem bekanntlich ein nahezu linearer Zusammenhang zwischen Motorstrom und abgegebenem Drehmoment besteht. Bei der vorliegenden Spritzenpumpe ist die Vortriebsgeschwindigkeit jedoch extrem langsam, so daß der Kolben der Spritzenpumpe, insbesondere beim Einsatz von Kunststoffspritzen, schrittweise durch einen ständigen Wechsel zwischen einem Haft- und einem Gleitreibungszustand, d.h. quasikontinuierlich vorwärtsbewegt wird. Entsprechend ist auch der Motor ständig wechselnd belastet, wobei die Belastung zur Überwindung der Haftreibung größer ist als während eines Gleitreibungszustands. Der Motorstrom folgt somit diesen

19

wechselnden Lastfällen und wechselt somit ständig seinen Absolutwert. Der Kurzzeitverlauf des Stroms wird stark von der eingestellten Vortriebsgeschwindigkeit beeinflußt. Allgemein nimmt der Betrag der Stromspitzen zur Überwindung der Haftreibungszustände mit abnehmender Vortriebsgeschwindigkeit zu.

Ein zweckmäßiges Maß für den Motorstrom ist daher ein Motorstrommittelwert. Um diesen hinreichend genau ermitteln zu können, muß der Motorstrom integriert werden und in den Integrationsalgorhitmus die jeweilige Vortriebsgeschwindigkeit einbezogen werden. Die Realisierung eines geeigneten Integrators mit konventionellen Schaltmitteln ist äußerst aufwendig. In der vorliegenden Ausführung übernimmt daher der Mikrorechner diese nichtsicherheitsrelevante Funktion der Motorstromintegration unter Berücksichtigung der eingestellten Förderraten. Die eingestellten Förderraten werden dem Mikrorechner ohnehin durch die Stellung der Sollwertpotentiometer 7 und des Wahlschalters 18 mitgeteilt. Der Mikrorechner errechnet einen Motorstrommittelwert und vergleicht diesen mit festprogrammierten oder extern vorgegebenen Referenzwerten für einen Minimal- und Maximalstrom. Bei Abweichungen davon wird ein Stromalarm erzeugt, der als Druckalarm dem Betreiber angezeigt wird.

Es hat sich als vorteilhaft und zweckmäßig erwiesen, die mechanische Reibung der Einrichtung ohne Spritze zu messen und zusammen mit der Motorkennlinie als gerätespezifische, in der Regel nicht mehr veränderbare Gerätekennlinie fest einzugeben. Zusätzlich wird bei der Integration die Förderrate berücksichtigt, die dem Mikroprozessor, wie oben ausgeführt, ohnehin bekannt ist. Durch Veränderung des Widerstands 24 kann die Lage der Motorstrom-Momentenkennlinie den im Speicher befindlichen Referenzwerten angepaßt werden.

Der Wechsel der Förderleistung durch Umschalten des Betriebsschalters 18 - mal 1; mal 10 - wird in beiden Richtungen durch zweimaligen optischen und akustischen Alarm durch den Mikrorechner 14 dem Benutzer angezeigt. Über eine Schottky-Diode ist das Gate des MOS-Abschalttransistors entkoppelt, so daß bei der Umschaltung ein Motorstillstand nicht erfolgt.

Im Betrieb wird ein Rechneralarm durch Aktivierung der Steuerleitung für die Alarmeinheit (Leitung 70) angezeigt, ein Alarm durch Überstrom zusätzlich durch Umschalten auf die rote LED in der optischen Anzeige 65' (Leitungen 66, 67).

# KUHNEN & WACKER

## ──────── PATENTANWALTSBÜRO ────────

### REGISTERED REPRESENTATIVES BEFORE THE EUROPEAN PATENT OFFICE

Fresenius AG.

6380 Bad Homburg

PATENTANWÄLTE

R.-A. KUHNEN*, DIPL.-ING.
W. LUDERSCHMIDT**, DR., DIPL.-CHEM.
P.-A. WACKER*, DIPL.-ING., DIPL.-WIRTSCH.-ING.

- 11 FR 0736 -

## Patentansprüche

1. Überwachte Regeleinrichtung für ein Gerät, dessen Ausgangsleistung zur Vermeidung sicherheitsgefährdender Wirkungen überwacht ist,

mit einer Regelschaltung, die einen Sollwertgeber, einen Regelverstärker und einen Istwertgeber enthält,

mit einer Überwachungsschaltung für die Ausgangsleistung mit wenigstens einem Grenzwertvergleicher, der die Ausgangsleistung bei Überschreiten eines kritischen Grenzwertes entweder abschaltet oder innerhalb eines unkritischen Bereichs hält, und

mit einer Testschaltung für einen initialen Test zur Überprüfung der Funktionsfähigkeit der Überwachungsschaltung vor der Betriebsfreigabe,

dadurch gekennzeichnet,

BÜRO 6370 OBERURSEL**
LINDENSTRASSE 10
TEL. 06171/56849
TELEX 4186343 real d

BÜRO 8050 FREISING*
SCHNEGGSTRASSE 3-5
TEL. 08161/62091
TELEX 526547 pawa d

ZWEIGBÜRO 8390 PASSAU
LUDWIGSTRASSE 2
TEL. 0851 36616

TELEGRAMMADRESSE PAWAMUC — POSTSCHECK MÜNCHEN 1360 52-802
— TELECOPY: 08161/62096 (GROUP II - automat.) —

daß die Regelschaltung und die Überwachungsschaltung aus Einzelbauteilen, insbesondere Einzelhalbleitern, konventionell aufgebaut sind, und

daß die Testschaltung aus einem Mikrorechner (14) besteht.

2. Überwachte Regeleinrichtung nach Anspruch 1, dadurch gekennzeichnet, daß die Überwachungsschaltung und Testschaltung mit einer akustischen und/oder optischen Alarmgabeeinrichtung (37, 38) verbunden sind.

3. Überwachte Regeleinrichtung nach Anspruch 1 oder 2, dadurch gekennzeichnet, daß die Überwachungsschaltung ein Zeitverzögerungsglied (11) enthält, so daß kurzzeitige Überschreitungen eines Grenzwertes keinen Einfluß auf die Ausgangsleistung oder Alarmgabe haben, und andererseits bei Überschreitung eines Grenzwertes eine sichere Alarmgabe erfolgt.

4. Überwachte Regeleinrichtung nach einem der Ansprüche 1 bis 3, dadurch gekennzeichnet, daß während der Testphase die Leitung der Regelschaltung zum Stellglied (13) unterbrochen ist (Schaltarm 21) und nach Beendigung der Testphase und positiver Überprüfung der Überwachungsschaltung vom Mikrorechner (14) geschlossen ist.

5. Überwachte Regeleinrichtung nach einem der Ansprüche 1 bis 4, dadurch gekennzeichnet, daß für die Energieversorgung während des Tests die Ladung eines Kondensators (49) vorgesehen ist, der zu Beginn des Tests zugeschaltet wird, und daß nach positivem Test erst die übliche, kontinuierliche Energieversorgung (51) vom Mikrorechner (14) zugeschaltet wird.

6. Überwachte Regeleinrichtung nach einem der Ansprüche 1 bis 5, dadurch gekennzeichnet, daß das Gerät eine Spritzenpumpe mit drehzahlgergeltem Elektromotor (13) mit einer Drehzahlüberwachung ist.

7. Überwachte Regeleinrichtung nach Anspruch 6, dadurch gekennzeichnet, daß die Regelschaltung aus einem Potentiometer (1) als ersten Sollwertgeber und einem als Komparator geschalteten Operationsverstärker (2) besteht, dessen Eingänge mit dem Sollwertgeber (1) und einem Tachogenerator (4) verbunden sind und dessen Ausgang mit der Basis eines Leistungstransistors (3) im Motorstromkreis verbunden ist,

daß die Überwachungsschaltung aus zwei als Komparator geschalteten Operationsverstärkern (5, 6) für einen oberen und unteren Grenzwert (Fenster) besteht, wobei die Eingänge mit einem zweiten Sollwertgeber (7) verbunden sind, der mit dem ersten Sollwertgeber (1) zur entsprechenden Verschiebung des Fensters gekoppelt ist, und weitere Eingänge mit dem Tachogenerator (4) verbunden sind,

daß die Ausgänge (26, 27) in einer Oderschaltung (8) verglichen werden, deren Ausgang bei einer Grenzwertüberschreitung einen Kondensator (30) als Zeitglied lädt, wobei der Ladezustand in einem weiteren als Komparator geschalteten Operationsverstärker (10) gegen eine feste Spannung verglichen wird,

daß bei Überschreiten einer bestimmten Ladespannung der mit einem Schalttransistor (12) im Motorstrom und mit der Alarmgabeeinrichtung verbundene Ausgang des Komparators (10) schaltet,

daß der Mikrorechner (14) der Testschaltung über einen Analogdigital-Umsetzer (15) mit dem zweiten Sollwertgeber (7) und direkt mit den Ausgängen der Operationsverstärker (5, 6, 9, 10), dem Kondensator (30) des Zeit-

4

glieds (11) der Überwachungsschaltung, sowie einem Schalttransistor (73, 23) zur Unterbrechung des Motorstromkreises, einem Freigaberelais (22) und der Alarmeinrichtung (37,38) verbunden ist.

**Europäisches Patentamt**

**EUROPÄISCHER RECHERCHENBERICHT**

0152770
Nummer der Anmeldung

EP 85 10 0514

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,X | DE-A-2 841 220 (BOSCH) <br> * Anspruch 1; Figur 1 * | 1,2 | G 05 B .9/02 <br> G 05 B 23/02 |
| X | US-A-4 155 116 (TAWFIK u.a.) <br> * Spalte 3, Zeile 7 - Spalte 5, Zeile 23; Figuren 1-3 * | 1 | |
| A | GB-A-2 086 111 (NORTHERN ENGINEERING) <br> * Zusammenfassng; Anspruch 1 * | 1,2 | |
| A | GB-A-2 130 755 (FUJI) <br> * Insgesamt * | 1,2 | |
| D,A | GB-A-2 123 154 (GENERAL ELECTRIC) | | |

**RECHERCHIERTE SACHGEBIETE (Int. Cl.4)**

G 05 B
G 01 R
H 02 H

Der vorliegende Recherchenbericht wurde für alle Patentansprüche erstellt.

| Recherchenort <br> DEN HAAG | Abschlußdatum der Recherche <br> 26-04-1985 | Prüfer <br> KOLBE W.H. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82